# EUROPÄISCHE PATENTSCHRIFT

(11) **EP 1 239 412 B1**
(45) Veröffentlichungstag und Bekanntmachung des Hinweises auf die Patenterteilung: **25.08.2004**
(21) Anmeldenummer: 02005147.0
(22) Anmeldetag: 07.03.2002
(51) Int. Cl.: G06K 19/077

(54) **Verfahren zum Heissverkleben eines Chipmoduls mit einem Trägersubstrat**
Method for heat bonding a chip module with a carrier substrate
Procédé pour coller à chaud un module à circuit intégré dans un substrat support

(30) Priorität: 07.03.2001 DE 10110939
(43) Veröffentlichungstag der Anmeldung: 11.09.2002
(73) Patentinhaber: MUEHLBAUER AG, 93426 RODING (DE)
(72) Erfinder: Kirschbauer, Josef, Dipl-Ing., 93476 Blaibach (DE); Bach, Peter, Dipl.-Ing., 93413 Cham (DE)
(74) Vertreter: Grünecker, Kinkeldey, Stockmair & Schwanhäusser Anwaltssozietät

(56) Entgegenhaltungen:
- DE-A- 4 224 994
- DE-A- 19 502 398
- US-A- 4 625 102

## Beschreibung

Die vorliegende Erfindung betrifft ein Verfahren zum Heißpressverbinden von einem Chipmodul mit einem Trägersubstrat, bei dem das mindestens eine Chipmodul mit dem mindestens einen Trägersubstrat in Kontakt gebracht und mit einem beheizten Pressstempel ein zumindest bereichsweises Heißverkleben des Chipmoduls mit dem Trägersubstrat bewirkt wird.

In der Technik werden z. B. bei der Herstellung von Chipkarten in die mit einer Aussparung versehenen Chipkarten-Grundkörper Chipmodule eingesetzt. In vielen Fällen ist der eine oder die mehreren Chip(s) auf einer strukturierten Metallfolie angebracht, die die Kontaktflächen an der Oberfläche der Chipkarte bereitstellen. Der mindestens eine Chip ist dann über geeignete Leitungsverbindungen (Bond-Drähte) mit den metallischen Kontaktflächen verbunden. Der mindestens eine Chip wird an der Rückseite der Kontaktzonen in einer Kunststoffverkappung eingebettet. Die Aussparung des spritzgegossenen oder einen Laminataufbau aufweisenden Chipkarten-Grundkörpers weist unterschiedliche Tiefenbereiche auf. Ein mittlerer Bereich dient zur Aufnahme der Verkappung einschließlich des mindestens einen darin angeordneten Chips. Die zweite flachere Aussparungsstufe dient zur Aufnahme der metallischen Kontaktzonen. Die Chipmodule werden in aller Regel mit dem Chipkarten-Grundkörper innerhalb der Aussparung verklebt. In diesem Zusammenhang hat sich hauptsächlich ein Heißverkleben mittels Heißpressverbinden etabliert. Grundsätzlich besteht zwar die Möglichkeit, dass auch Bereiche des Chipmoduls bzw. des Chipkarten-Grundkörpers miteinander verschweißt werden. In aller Regel wird jedoch ein geeigneter Klebstoff verwendet, der durch Hitze aktiviert wird. Deshalb folgt demnach erst ein Einbringen des geeigneten Klebemittels und anschließendes Einsetzen des Chipmoduls und abschließend ein Heißverpressen, so dass das Klebemittel unter Druck und Hitzeeinwirkung die notwendige Verbindung herstellt. Dieses Verfahren hat sich weitgehend bewährt. Jedoch bestehen auch hier Bestrebungen, insbesondere hinsichtlich der Herstellgeschwindigkeit Verbesserungen durchzuführen.

Des weiteren ist aus der DE 195 02 398 A1 ein Verfahren zur Montage eines elektrischen Moduls in einem Kartenkörper unter Einsatz von Druck und Wärme beschrieben.

Um die thermische Belastung des elektronischen Moduls und des Kartenkörpers während der relativ kurzen Aufwärmphase in einem getakteten Fertigungsprozess zu vermeiden, wird das Verfahren in mehrere Verfahrensschritte aufgeteilt, wobei das in den Kartenkörper eingesetzte elektronische Modul zusammen mit diesem vorgewärmt wird. Vorzugsweise sollte dabei die Temperatur, mit der das elektronische Modul beaufschlagt wird, im ersten Arbeitsschritt so gering wie möglich gehalten werden und somit unter der des letzten Arbeitsschritts liegend, um so die thermische Belastung des elektronischen Moduls und des Kartenkörpers, bedingt durch die starken Temperaturunterschiede, so gering wie möglich zu halten. Es wird demnach während der gesamten Arbeitsschritte eine möglichst große Angleichung der Temperatur des elektronische Moduls und des Kartenkörpers angestrebt.

Es ist daher eine Aufgabe der vorliegenden Erfindung, ein Verfahren und eine Vorrichtung der eingangs genannten Art bereitzustellen, durch die schnelleres Heißpressverbinden von einem Chipmodul mit einem Trägersubstrat erzielt werden kann.

Bezüglich des Verfahrens wird die Aufgabe dadurch gelöst, dass das mindestens eine Chipmodul vor dem Heißkleben auf eine für das Chipmodul unkritische Temperatur separat von dem Trägersubstrat erhitzt und zu dem Trägersubstrat überführt und in einem erhitzten Zustand durch den beheizten Pressstempel mit dem Trägersubstrat heiß verklebt wird. Demnach wird unter Ausnutzung der Wärmekapazität des Chipmoduls bereits vor dem eigentlichen Heißverklebungsvorgang, insbesondere der später zu verklebenden Bereiche des Chipmoduls und/oder des Trägersubstrats, das Temperaturniveau angehoben, so dass beim Aufsetzen des beheizten Pressstempels weniger Energiezufuhr für die Verklebung notwendig ist. Insbesondere bei relativ großen elektrischen Bauteilen können somit die für das Heißverkleben bzw. das Aufsetzen des beheizten Pressstempels notwendigen Zeiten um ein beträchtliches Maß herabgesetzt werden. Auch können Überhitzungen, die bei längerem Kontakt mit einem beheizten Pressstempel bislang auftreten konnten, durch die kürzeren Kontaktzeiten mit diesem vermieden werden. Hierdurch werden insbesondere empfindliche Chipmodule vor Beschädigungen geschützt. Unter Chipmodul soll in diesem Zusammenhang auch Baugruppen verstanden werden, die in einem einheitlichen Heißklebevorgang mit einem Trägersubstrat verbunden werden.

Die oben erwähnte unkritische Temperatur hängt vom jeweiligen Versagensfall des mit dem Trägersubstrat zu verbindenden Bauteils ab. Abgedeckt werden soll im Wesentlichen ein Temperaturbereich, der oberhalb der gewöhnlichen Prozesstemperatur (meist Raumtemperatur) bis zu einem kritischen Wert sich erstrecken (gegebenenfalls mit Sicherheitsabstand). Es soll eine bewusste Temperaturerhöhung zum Verringern der durch den beheizten Pressstempel einzubringenden Wärme erfolgen, die sich im Augenblick des Heißverklebens (d.h. Aufdrücken des beheizten Pressstempels) vorteilhaft auswirkt.

Während bei der DE 195 02 398 A1 entweder das elektronische Modul in dem Kartengrundkörper oder aber ein thermoaktivierbarer Kleber im Kartenkörper vorerwärmt werden, erfolgt die separate Vorwärmung gemäß der vorliegenden Erfindung getrennt von dem Trägersubstrat, weshalb das Trägersubstrat nicht noch zusätzlich mitvorgewärmt werden muss. Insbesondere bei größeren Chipmodulen lässt sich der eigentliche Heißklebevorgang viel besser vorbereiten, so dass die für den eigentlichen Heißklebevorgang erforderlichen Zeiten reduziert werden können. Wird z.B. das Verfahren im Durchlauf betrieben, so wird das Chipmodul mit dem Trägersubstrat erst kurz vor dem Heißklebevorgang zusammengebracht, während der Vorwärmvorgang dann ausgeführt wird, während bereits vorgewärmte Chipmodule dem Heißklebevorgang unterzogen werden. Insbesondere bei getakteten Herstellvorgängen, ist durch das erfindungsgemäße befahren die Zeitspanne, von dem Auf- bzw. Einsetzen des Chipmoduls auf bzw. in das Trägersubstrat bis zur Fertigstellung des Heißklebevorgangs kürzer als nach dem Verfahren der
DE 195 02 398 A1 (vorausgesetzt es werden gleiche elektronische Module und Kartenkörper verwendet).

Bevorzugt kann das Chipmodul auf eine Temperatur von 150°C bis 200°C vorgeheizt werden. Dieser Temperaturbereich liegt Günstigerweise kurz unterhalb der Dauerbelastbarkeitstemperatur bzw. Dauerstabilitätstemperatur des Chipmoduls, die für jedes Chipmodul durch den Hersteller vorgegeben ist. Es wird demnach unter Ausnutzung der Wärmespeicherkapazität des Chipmoduls eine möglichst ausgereizte Vorerhitzung bis nah an die Dauerstabilitätstemperatur heran vorgenommen. Demnach wird nicht versucht, die Temperatur möglichst gering nur gerade so hoch zu fahren, das Spannungen vermieden werden, sondern es erfolgt eine Vorerwärmung bis nahe an die Belastbarkeitsgrenze heran. Insbesondere ist wichtig, dass sich das gesamte Chipmodul erwärmt, so dass sich kein "Saugeffekt" einstellt, der Wärme aus dem Verbindungsbereichen des Chipmoduls mit dem Trägersubstrat zu schnell abführt. Während sich dieser Effekt bei "normalen" Chipmodulen nicht sonderlich bemerkbar macht, tritt dieser um so verstärkt bei größeren Chipmodulen auf, wie sie für Multimedia- und Smartmediakarten Verwendung finden. Interessant wird dies demnach z.B. bei Chipmodulen mit einem Volumen von größer 100 mm³, bevorzugt größer 150 mm³.

Bevorzugt wird die Temperatur so eingestellt, dass sie unter der Dauerbelastbarkeitstemperatur (d.h. der Temperatur, bei der das Modul zerstört würde) bleibt und dabei andererseits schon möglichst nah an die Reaktionstemperatur für den Heißklebevorgang herankommt.

Eine besonders günstige Ausführungsform sieht vor, dass die Chipmodule mittels eines Warmluftstroms auf die gewünschte Temperatur gebracht werden. Die Parameter des Warmluftstroms sind sehr einfach einstellbar, so dass sehr leicht Einfluss auf die einzubringende Wärmemenge gegeben ist. Sowohl Druck als auch Temperatur und Strömungsgeschwindigkeit des Warmluftstroms, um nur einige der einstellbaren Parameter zu nennen, können variiert werden. Ein Warmluftstrom hat den Vorteil, dass eine Überhitzung des Chipmoduls nahezu ausgeschlossen werden kann, weil immer nur die Temperatur dem Chipmodul zugeführt wird, die der Warmluftstrom gerade hat. Dies wirkt sich insbesondere bei Stillstandsphasen im Verfahrensablauf vorteilhaft aus, da der Warmluftstrom nicht unbedingt unterbrochen werden muss.

Im Gegensatz zur Erwärmung durch Konvektionswärme, erhöht sich bei einer Warmluftzufuhr die Temperatur selbst dann nicht weiter, wenn das Chipmodul über einen längeren Zeitraum den Warmluftstrom ausgesetzt wird. Zum Beispiel müsste bei der Verwendung von Heizwendeln die Temperatur der Heizwendel weit über die kritische Temperatur der Module liegen, um genügend Wärme in die Module zu bringen.

Vom Verfahrensablauf ist es weiter vorteilhaft, wenn gemäß einer Variante das Chipmodul zuerst erhitzt und anschließend mittels einer Übergabeeinheit auf dem Trägersubstrat platziert wird. Die Erhitzung kann daher vollkommen unabhängig von dem Transportweg des Trägersubstrats erfolgen, so dass mit dem Trägersubstrat eigene Verfahrensabläufe parallel durchführbar sind.

In diesem Zusammenhang kann vorteilhafterweise über die Übergabeeinheit ein Temperaturausgleich zum im Wesentlichen Ausgleichen des Temperaturverlustes erfolgen. Hierdurch wird gewährleistet, dass auch beim Überführen des Chipmoduls auf das Trägersubstrat möglichst die voreingebrachte Wärme im Chipmoduls beinhaltet bleibt.

Vor dem eigentlichen Heißverkleben mit dem beheizten Pressstempel ist es möglich, einen Heftvorgang zum Anheften des Chipmoduls an das Trägersubstrat durchzuführen. Durch diesen Heftvorgang wird nur ein ganz kleiner Bereich oder kleine Bereiche des Chipmoduls am Trägersubstrat angeheftet, um die Position sicherzustellen. Anschließend kann die in das Chipmodul voreingebrachte Wärme schon ihre Wirkung entfalten und nachfolgend wird dann der beheizte Pressstempel aufgesetzt.

Um sowohl das Material des Trägersubstrats als auch das Material des Chipmoduls möglichst durch die Wärme- bzw. Hitzewirkung nicht zu beeinflussen, bietet es sich an, dass das Chipmoduls und das Trägersubstrat unter Zwischenfügen eines Heißverklebers miteinander heiß verklebt werden. Dieser Heißverkleber entfaltet seine Klebekraft dann durch das Aufpressen und die Wärmeeinwirkung des beheizten Pressstempels. Mit anderen Worten erfolgt die Aktivierung durch die Wärme und ein wenig durch Druckeinbringung. Der Vorteil dieser Heißverkleber besteht darin, dass sie ihre Wirkung nur bei entsprechender Aufbringung der Wärme und/oder Druckparameter entfalten und ohne diese Parameter ein in geeigneter Weise durchgeführtes Verkleben nicht stattfindet.

Vorteilhaft haben sich insbesondere Heißverkleber herausgestellt, die in Form einer Heißklebefolie verwendet werden. Solche Heißklebefolien lassen sich mit gleichbleibender Dicke herstellen und sind für das präzise Anordnen von Chipmodul auf einem Trägersubstrat äußerst günstig. Auch können durch Heißklebefolien exakte Klebezonen vorgegeben werden. Die Formen, mit denen Heißklebefolien aufbringbar sind, sind nahezu beliebig.

Soll das Verfahren zum kontinuierlichen Herstellen von zahlreichen elektronischen Bauelementen verwendet werden, so bietet es sich gemäß einer Verfahrensvariante an, das Vorheizen des Chipmoduls, das Auf- und/oder Einsetzen auf bzw. in das Trägersubstrat und das Heißverkleben in einem getakteten Fließherstellverfahren auszuführen, wobei das Vorheizen sich über mindestens zwei Takte, bevorzugt vier Takte, erstreckt. Der Vorteil liegt darin, dass jeder einzelne Taktschritt äußerst kurz gehalten werden kann, wobei sich die Aufheizphase verlängert. Hierdurch wird eine relativ lang dauernde Wärmeeinbringung zugunsten anderer schnellerer Verfahrensschritte auf mehrere Taktschritte ausgedehnt. Insgesamt kann hierdurch der Ausstoß trotz der langen Aufheizphase hoch gehalten werden.

Bevorzugt kann das Chipmodul auf einem taktweise, um einen vorgegebenen Winkelbetrag sich weiter drehenden, beheizten Drehteller weiterbewegt werden. Das Chipmodul wird hierzu auf dem beheizten Drehteller abgelegt, der dann als Pufferspeicher für die Aufheizphase dient. Mindestens zwei Taktschritte weiter wird dann das Chipmodul nach dem Aufheizen mit dem Trägersubstrat in Kontakt gebracht.

Besonders vorteilhaft wirkt sich das gesamte Verfahren beispielsweise dann aus, wenn als Trägersubstrat ein Chipkarten-Grundkörper verwendet wird und das Chipmodul in einer Aussparung im Chipkarten-Grundkörper eingesetzt wird. Bei bislang hergestellten Chipkarten hatte das Heißverpressen der Chipmodule im Kartengrundkörper keinen nennenswerten negativen Einfluss und Verzögerung zur Folge, da die einzubringenden Wärmemengen relativ gering und die Bauteile entsprechend klein waren. Aber auch hier lassen sich Verfahrensabläufe beschleunigen. Besonders günstig macht sich das Ganze bemerkbar, wenn Multimediakarten hergestellt werden, bei denen die Chipmodule um ein Vielfaches größer sind als bei herkömmlichen Chipkarten. Die einzubringende Wärmemenge für den Heißklebevorgang steigt hier um ein Beträchtliches, weshalb es ohne die erfindungsgemäße vorherige Wärmeeinbringung zu großen Verfahrensverzögerungen aufgrund überlanger Heißverklebungsvorgänge kommen würde. Bevorzugt bestehen hierbei die Kartengrundkörper aus gespritztem Kunststoff oder aus Kunststofflaminat und das Chipmodul aus einem Kontaktflächen bildenden Metallstück und daran angebrachter Verkapselung mit den integrierten Chips.

Wäre das separate Vorheizen nicht vorhanden, dann könnte nicht ausreichend Energie durch den beheizten Pressstempel (Schweißstempel) in das Modul "gepumpt" werden, um eine ausreichende Heißverklebung von Karten, Heißklebefolie und Modul z.B. innerhalb einer geforderten Zeit von 1000 Millisekunden und weniger zu erreichen. Auch mehrfaches Heißpressen mit dem beheizten Pressstempel erzielt nicht den gewünschten Zweck, da durch das ungünstige Verhältnis zwischen Modulvolumen und den meist aus Metall bestehenden Kontaktflächen die Energie vom Rand zum Inneren des Moduls hin abgeleitet wird. Dies birgt zusätzlich die Gefahr, dass bei zu hoher Temperatur des beheizten Pressstempels das Modul zu stark thermisch belastet wird. Diese Nachteile können sämtlich durch das vorher erfolgte Vorheizen beseitigt werden.

Des Weiteren kann mindestens ein Heißklebefolienstück, das auf einem Trägerband angeordnet ist, mit dem Trägersubstrat in Kontakt gebracht, eine Verbindung mit dem Trägersubstrat herbeigeführt und anschließend das Trägerband von dem an dem Trägersubstrat anhaftenden Heißklebefolienstück abgezogen werden. Durch das Verwenden eines Trägerbandes, auf dem die Heißklebefolienstücke aufgebracht sind, lässt sich durch Führung mittels des Trägerbandes eine exakte Ausrichtung der Heißklebefolienstücke sowie genaue Positionierung auf dem Trägersubstrat sehr einfach herbeiführen. Darüber hinaus ist das Trägerband in aller Regel aus einem Material hergestellt, dass eine möglichst geringe Klebeneigung aufweist und daher die Heißklebefolienstücke sehr schnell unter Einsetzung richtiger Abgabeparameter an das Trägersubstrat abgibt. Hierdurch lassen sich die Heißklebefolienstücke hervorragend handhaben und in möglichst kurzer Verfahrenszeit auf dem Trägersubstrat anordnen. In diesem Zusammenhang besteht auch die Möglichkeit, aus vorher auf dem Trägerband flächig aufgebrachte Heißklebefolienflecken durch einen Stanzvorgang die gewünschten Heißklebefolienstücke herauszuformen. Hierbei entstehen maximal Fensterbereiche im Trägerband, ohne dass der Gesamtverbund zerstört wird.

Dieser Gedanke soll sowohl in Kombination mit dem erfindungsgemäßen Verfahren als auch als alleiniger, separater erfinderischer Gedanke gesehen werden, so dass hierauf eine Teilungsanmeldung gerichtet werden könnte (Gegenstand des Anspruches 12, ohne Abhängigkeit von einem der vorangegangenen Ansprüche).

Hierzu sei anzumerken, dass bislang die Heißklebefolien immer auf sogenannte Modulbänder (bei kleineren Chipmodulen) laminiert wurden. Gemäß der vorliegenden Erfindung befinden sich die Heißklebefolienstücke auf einem Trägerband, dass zu einer Rolle aufgewickelt werden kann. Nach dem Entfernen des Heißklebefolienstücks kann dann das verbleibende Trägerband wieder zu einer Rolle aufgewickelt werden. Eine solche Zuführung von Heißklebefolienstücken eignet sich sehr gut für ein getaktetes Einbringen von Heißklebefolienstücken im Durchlaufverfahren, da die Heißklebefolienstücke nicht vereinzelt vorliegen, weshalb viele Handhabe- und Ausrichtschritte entfallen können bzw. vereinfacht sind.

Des Weiteren kann die Verbindung zwischen Trägersubstrat und Heißklebefolienstück mittels eines auf das Trägerband aufdrückenden, beheizten Pressstempels herbeigeführt werden. Günstigerweise drückt der beheizte Pressstempel auf die Rückseite des Trägerbandes, auf der das aufzubringende Heißklebefolienstück nicht aufgebracht ist. Durch die Druck- und Wärmeeinwirkung geht das Heißklebefolienstück eine innige Verbindung mit dem Trägersubstrat ein, so dass die Anhaftung an diesem größer ist als die verbleibende Anhaftung an dem Trägerband und sich hierdurch das Trägerband von dem Heißklebefolienstück sehr einfach lösen lässt. Dies könnte durch einfaches Festhalten des Trägersubstrats erfolgen, während das Trägerband weitergeführt wird.

Ein weiterer Vorteil besteht darin, dass die Temperatur möglichst gering gehalten werden kann, bei entsprechender Auswahl von Trägerband und Heißklebefolienmaterial. Die eigentliche Klebereaktion (Verkleben des Chipmoduls und dem Trägersubstrat) folgt später. Die Temperatur sollte vorteilhaft so gewählt werden, dass die Haftung des Heißklebefolienstücks am Trägersubstrat nach dem Aufpressen des beheizten Pressstempels gerade größer ist als die Haftung am Trägerband, sich das Heißklebefolienstück aber noch leicht vom Trägerband ablöst.

Günstigerweise kann das mindestens eine Heißklebefolienstück die Klebeform genau vorgeben und vor dem Verbinden mit dem Trägersubstrat eine im Wesentlichen exakte Ausrichtung des Heißklebefolienstücks zum Trägersubstrat erfolgen. Wenn z. B. Fensterbereiche in das Trägerband zur Ausformung der Heißklebefolienstücke eingestanzt werden, so können diese als Ausrichthilfe zum exakten Platzieren der auf der anderen Seite angeordneten Heißklebefolienstücke herangezogen werden. Ausrichtvorgänge im Zehntel-, wenn nicht sogar im Hundertstelmillimeterbereich, sind ohne weiteres möglich.

Das mindestens eine Heißklebefolienstück kann mit einem Grund einer in einem Chipkarten-Grundkörper eingeformten Aussparung verbunden werden, wobei nachfolgend das mindestens eine elektrische Bauteil in die Aussparung eingesetzt wird. Unter Grund soll im vorliegenden Fall auch ein Absatz in der Aussparung verstanden werden, der hinter die Hauptoberfläche des Chipkarten-Grundkörpers zurückversetzt ist. Im Zusammenhang mit der Verwendung eines Trägerbandes lässt sich das Einbringen von Heißklebefolienstücken oder eines Heißklebefolienstücks in eine solche Aussparung mit Hilfe eines geeigneten beheizten Pressstempels sehr einfach und mit äußerster Präzision erzielen. Von Vorteil ist diese Vorgehensweise noch zusätzlich dadurch, weil die Chipkarten-Grundkörper billiger sind als die Chipmodule. Sollte das Anbringen der Heißklebefolienstücke nicht in der gewünschten, exakten Weise erfolgt sein, so ist es billiger, eher einen Chipkarten-Grundkörper als Ausschuss auszusortieren, als ein mit Kleberesten versehenes Chipmodul.

Darüber hinaus kann auch in die Aussparungen im Chipkartengrundkörper ein lichtaktivierbarer Klebstoff eingebracht werden. Dies ist insbesondere dann von Vorteil, wenn die Aussparung mehrere Stufenbereiche umfasst, weil dann über das Trägerband mit Heißklebefolienstücken in aller Regel immer nur eine Stufe mit Klebestücken versorgt werden kann. Oftmals werden auch Chipkarten-Grundkörper verwendet, die eine Aussparung vorgegebener Größe aufweisen, wohingegen die Chipmodule zumindest in der Größe ihrer Verkappungsbereiche mit integriertem Chip variieren können. Dies hängt hauptsächlich von der Anzahl der in der Verkappung enthaltenen Mikrochips ab. Neben der Anhaftung dieser Verkappungsbereiche in einer anderen Zone der Aussparung kann dieser lichtaktivierbare Klebstoff auch als Füllmaterial dienen, wenn Chipmodule mit kleinerem Verkappungsbereich in eine Aussparung üblicher Größe eingesetzt werden. An der Oberfläche einer Chipkarte sind solche Unterschiede nicht zu erkennen; allerdings befinden sich auch keine Hohlraumbereiche unterhalb der Kontaktflächen, weil diese mit dem lichtaktivierbaren Klebstoff ausfüllbar sind.

Günstigerweise kann dieser Klebstoff vor dem Einsetzen des Chipmoduls mit hoher Intensität angeblitzt und dadurch aktiviert werden. Die hohe Intensität hängt ab von der Verfahrensgeschwindigkeit, insbesondere der Zeit, bis das Chipmodul eingesetzt wird. Das Anblitzen erfolgt bevorzugt mit einer UV-Blitzlampe. Wie es sich aus dem Vorangegangenen ergibt, kann dieser Klebstoff optional eingesetzt werden, je nach Erfordernis.

Um eine möglichst gute Klebeverbindung durch den Heißklebevorgang zu erzielen, kann das Heißverkleben in mindestens zwei Taktschritten erfolgen. Bevorzugt drücken hier nacheinander zwei verschiedene beheizbare Pressstempel auf ein und dieselbe Verklebestelle auf.

Nachfolgend kann nach dem Heißverkleben noch ein Kühlvorgang zum Entfernen einer vorbestimmten Wärmemenge von dem Chipmodul und/oder dem Trägersubstrat erfolgen. Wenn kurzzeitig hohe Wärmemengen durch den beheizten Pressstempel eingebracht werden, so erfolgt dies meistens an den Klebestellen, die im Abstand zum Mikrochip angeordnet sind. Damit diese Wärmemengen keine Zeit haben, noch bis zum Mikrochip vorzudringen, kann dieser zusätzliche Kühlvorgang noch nachgeschaltet werden.

Günstigerweise kann dieser Kühlvorgang durch einen gekühlten Pressstempel durchgeführt werden. Hier besteht die Möglichkeit, dass dieser an genau den Stellen anliegt, wie zuvor die beheizten Pressstempel.

Des Weiteren bezieht sich die Erfindung auf eine Vorrichtung zum Heißpressverbinden von mindestens einem Chipmodul mit einem Trägersubstrat, insbesondere zum Durchführen des Verfahrens nach einem der Ansprüche 1 bis 20. Die Vorrichtung umfasst
- eine Zuführeinrichtung für Chipmodule,
- eine Zuführeinrichtung für Trägersubstrate,
- eine Heißpresseinrichtung zum Heißverkleben des mindestens einen Chipmoduls mit dem Trägersubstrat und
- eine Heizeinrichtung zum Erhitzen des mindestens einen Chipmoduls auf eine für dieses unkritische Temperatur,
- eine Handhabeeinrichtung zum Auf- und/oder Absetzen mindestens eines vorgeheizten Chipmoduls auf bzw. in mit einen Trägersubstrat,
- die Heizeinrichtung ist in Produktionsreihenfolge vor der Handhabeeinrichtung und der Heißpresseinrichtung angeordnet und die Heißpresseinrichtung ist auf ein vorgewärmtes Chipmodul einwirkbar ausgestaltet.

Unter Produktionsreihenfolge ist hier die von der Vorrichtung ausgeführte Prozessreihenfolge zum Verbinden der Chipmodule mit einem Trägersubstrat zu verstehen. Durch diese Anordnung soll, wie oben bei dem beschriebenen Verfahren bereits erwähnt, eine Vorerwärmung des mindestens einen Chipmoduls vor dem Auf- und/oder Einsetzen auf bzw. in das Trägersubstrat bewirkt werden. Die Vorerwärmung führt zur Verminderung der Wärmeeinbringung beim eigentlichen Heißklebevorgang und der dadurch reduzierten Prozesszeit.

Günstig ist es weiter, wenn die Heizeinrichtung eine einstellbare Warm- bzw. Heißluftzuführung zum Erhitzen der Chipmodule aufweist. Hieraus ergeben sich die Vorteile, dass eine Überhitzung der zu verbindenden Teile bzw. des vorzuheizenden Teils sehr einfach vermeidbar ist.

Gemäß einer Ausführungsform kann die Heizeinrichtung einen Drehteller mit Aufnahmestationen für die Chipmodule umfassen, und die Aufnahmestation eine Warm- bzw. eine Heißluftzuführung aufweisen. Die Warm- bzw. Heißluftzuführung kann dann so ausgestaltet sein, dass sie sämtliche Aufnahmestationen gemeinsam oder jeweils einzeln mit Warm- bzw. Heißluft beaufschlagt. Es ist demnach durchaus denkbar, dass eine einzige Warmluftquelle vorgesehen ist.

Des Weiteren kann die Zuführeinrichtung für die Trägersubstrate einen Drehtisch mit Aufnahmestation für die Trägersubstrate umfassen, wobei durch die Handhabeeinrichtung ein Chipmodul aus einer Aufnahmestation des Drehtellers entnehmbar und in eine Aufnahmestation des Drehtisches zum Auf- und/oder Einsetzen auf bzw. in das Trägersubstrat einsetzbar ist. Die Aufheizung des Chipmoduls erfolgt demnach auf dem Drehteller, von diesem wird das aufgeheizte Chipmodul entnommen und auf ein Trägersubstrat im Drehtisch gesetzt. Diese Vorgehensweise bietet den Vorteil, dass am Drehtisch bereits vorausgehende Verfahrensschritte an dem Trägersubstrat ausgeführt werden können, während das zugehörige Chipmodul auf dem Drehteller aufgeheizt wird.

Günstigerweise kann dem Drehtisch mindestens eine Heißpressstation mit einem beheizbaren Pressstempel als Heißpresseinrichtung zugeordnet sein, wobei der Pressstempel in einer Aufnahmestation des Drehtischs einfahrbar ausgestaltet ist. Für den hiernach durchzuführendem Heißklebevorgang können auch mehrere Heißpressstationen am Drehtischs hintereinander angeordnet werden.

Bevorzugt kann auch eine Kühleinrichtung zum Kühlen des Chipmoduls und/oder Trägersubstrats nach dem Heißverkleben vorgesehen sein. Überschüssige Wärme wird dann den Bauteilen hierdurch sehr schnell entzogen, wodurch auch die Heißklebeverbindung schneller belastbar ist.

Des Weiteren kann eine Aufbringeinrichtung zum Aufbringen eines Heißverklebers auf das Trägersubstrat vorgesehen sein. Diese Aufbringvorrichtung kann diesen Schritt z. B. während des Aufheizvorgangs für das Chipmodul durchführen. Des Weiteren führt ein Ausschuss, der durch die Aufbringvorrichtung verursacht wird, nur zu einem geringen Verlust, da das Trägersubstrat in aller Regel preiswerter ist als ein Chipmodul.

Bei einer weiteren Ausführungsform ist vorgesehen, dass die Aufbringeinrichtung eine Trägerbandtransporteinheit zur Aufnahme und zum Bewegen eines Trägerbandes mit darauf angeordneten Heißkleberfolienstücken und einer Andrückeinheit zum Andrücken mindestens eines Heißkleberfolienstücks zusammen mit dem Trägerband an ein Trägersubstrat umfasst. Diese Ausgestaltung kann auch als eigener Erfindungsgedanke aufgefasst und Bestandteil einer Teilungsanmeldung sein, ohne dass eine Abhängigkeit von vorangegangenen Ansprüchen notwendig ist. Heißkleberfolienstücke können mit solch einer Trägerbandtransporteinheit sehr exakt relativ zum Trägersubstrat ausgerichtet, in Position gebracht und aufgedrückt werden. Günstigerweise kann die Andrückeinheit einen beheizbaren Pressstempel umfassen, der dann für ein Anhaften der Heißkleberfolienstücke an dem Trägersubstrat und ein Ablösen von entsprechend ausgestaltetem Trägerband sorgt. Bevorzugt ist das mit vielen in Reihe hintereinander angeordneten Heißklebefolienstücken versehene Trägerband zur Vorratsrolle aufgerollt und wird im Laufe eines getakteten kontinuierlichen Herstellerprozesses schrittweise abgewickelt. Hierzu wird in aller Regel eine Aufwickelvorrichtung verwendet, die das nicht mehr mit den Heißklebefolienstücken versehene Trägerband nach dem Transfer der Heißklebfolienstücke auf das Trägersubstrat wieder aufwickelt. Hierzu können zwei Haspeln verwendet werden, die aufgrund einer geschickt gewählten Antriebsanordnung das Trägerband mit den Heißklebefolienstücken exakt vorbewegen können. Auf das zwischen den beiden Haspeln befindliche abgewickelte Trägerbandstück drückt dann der beheizte Pressstempel für den Transfer der Heißklebefolienstücke bei dieser Variante auf.

Dem Drehtisch kann mindestens eine Kleberauftragsstation zum Auftragen von Klebstoff auf das Trägersubstrat in Produktionsreihenfolge vor der Kontaktierungseinrichtung zugeordnet sein. Hierdurch wird sichergestellt, dass auch unterschiedliche Stufenbereiche in einer Aussparung, z. B. eines Chipkartengrundkörpers, mit Klebstoff versorgt werden. Auch kann der Klebstoff als Füllmaterial beim Einsetzen von Chipmodulen mit kleinerer Chipverkapselung verwendet werden.

Hierbei kann die Kleberauftragsstation ein durch Licht aktivierbaren Klebstoff auftragend ausgestaltet sein und dem Drehteller in Produktionsreihenfolge nachfolgend der Kleberauftragsstation und vor der Handhabeeinrichtung dem Drehteller eine Aktivierungsstation für den Klebstoff zugeordnet sein. Der noch nicht aktivierte Klebstoff lässt sich sehr leicht verarbeiten und auf das Trägersubstrat aufbringen.

Sobald dieser an Ort und Stelle auf dem Trägersubstrat angeordnet ist, wird er durch geeignete Aktivierungsverfahren mittels der Aktivierungsstation aktiviert. Gängige Methode ist ein Anblitzen des Klebstoffs mit hoher Lichtintensität.

Im Folgenden werden Ausführungsbeispiele der Erfindung anhand einer Zeichnung näher erläutert. Es zeigen:
- Fig. 1: eine schematische Draufsicht auf eine Gesamtanlage zum Einsetzen von Chipmodulen in einen Kartengrundkörper,
- Fig. 2: eine vergrößerte Querschnittsdarstellung durch eine Multimediakarte,
- Fig. 3: eine schematische Draufsicht auf einen Ausschnitt eines Trägerbandes mit Heißklebefolienstücken,
- Fig. 4: eine schematische Draufsicht auf einen Kartengrundkörper mit eingebrachtem Heißfolienkleber und
- Fig. 5: einen Querschnitt entlang der Linie V-V aus Fig. 4 geschnitten.

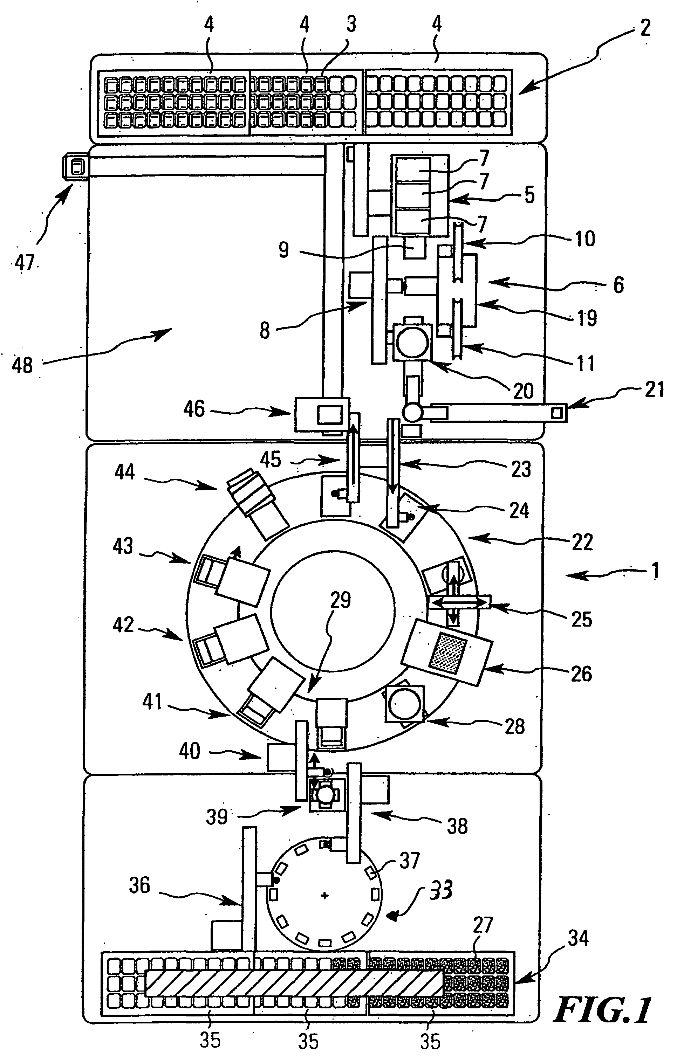

Die in Fig. 1 dargestellte Implanteranlage 1 ist im Wesentlichen in vier Bereiche gruppiert. Im ersten Bereich ist ein Ablagesystem 2 für fertige Multimediakarten 3 vorgesehen. Das Ablagesystem 2 umfasst mehrere Ablageplatten 4, die verfahrbar angeordnet sind.

Im zweiten Bereich ist ein Chipkartengrundkörpermagazin 5 und eine Aufbringstation 6 für Heißklebefolienstücke vorgesehen.

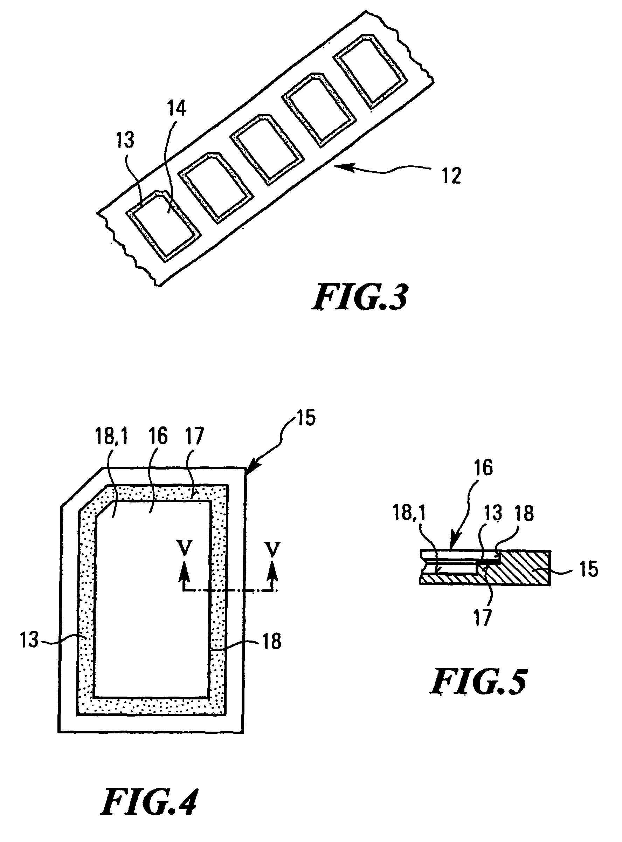

Die nicht näher dargestellten Kartengrundkörper werden aus Magazinstationen mit einer Aufnahmekapazität von bevorzugt 300 Kartengrundkörpem aufgenommen und nach unten vereinzelt. Zum Befüllen der Magazinstation 7 können diese von der Anlage 1 genommen werden. Bei leeren Magazinstationen 7 findet automatisch ein Magazinwechsel statt. Eine Handhabevorrichtung 8, die lediglich schematisch dargestellt ist, nimmt die Karten aus der Kartenvereinzelung 9 und überführt diese in die Aufbringstation 6. Die Aufbringstation 6 umfasst Transportspulen 10 und 11 zum Auf- bzw. Abwickeln eines Trägerbandes 12 (siehe Fig. 3). Auf der einen Seite des Trägerbandes 12 sind Rahmen 13 aus einer Heißklebefolie aufgebracht. Bevorzugt wird der von dem Rahmen 13 umgebene Bereich 14 durch Ausstanzen hergestellt. Demnach befindet sich im Bereich der Ausstanzung 14 weder eine Heißklebefolie 13 noch das Trägerband 12.

In den Figuren 4 und 5 ist schematisch ein Chipkartengrundkörper 15 dargestellt, in den bereits ein Rahmen 13 aus der Heißklebefolie 13 eingebracht ist. Der Grundkörper 15 weist eine nahezu rechteckige Form (in der Draufsicht) auf, wobei eine Ecke als Richtungsmarkierung abgeschrägt ist. Der Grundkörper 15 ist mit einer Aussparung 16 versehen, die Aussparung 16 weist zwei Abstufungen auf. Auf dem Stufenabsatz 17 der oberen Abstufung 18 ist die Heißklebefolie 13 aufgebracht. Der Aufnahmezweck dieser Aussparung 16 wird im Folgenden noch näher beschrieben.

In der Aufbringstation 6 wird das ursprünglich nur auf der Transportspule 10 aufgewickelte Trägerband 12 durch die Heißpresseinheit 19 hindurch geführt und von der Transportspule 11 aufgewickelt. Dies erfolgt schrittweise in vorgegebenen Taktschritten. Beim Hindurchführen des Trägerbandes 12 befindet sich gemäß der Draufsicht von Fig. 1 die Heißklebefolie 13 auf der Unterseite des Trägerbandes (im Gegensatz zur Darstellung von Fig. 3). In der Heißpressstation 19 ist ein beheizter, nicht dargestellter Pressstempel angeordnet, dessen Konturen im Wesentlichen der Kontur des Rahmens 13 aus Heißklebefolie entspricht. Nachdem ein Rahmen 13 exakt über der Aussparung eines Kartengrundkörpers 15 platziert ist, drückt der beheizte Pressstempel die Heißklebefolie auf den Stufenabsatz 18 der Aussparung 16. Durch die Verwendung von Druck und Temperatur erfolgt eine Art Verschweißung der Heißklebefolie mit dem Kartengrundkörper 15. Hierdurch wird die Anhaftung des Rahmens 13 an dem Kartengrundkörper 15 größer als an dem Trägerband 12. Durch Festhalten des Kartengrundkörpers 15 löst sich hiernach das Trägerband 12 sehr leicht von dem angedrückten Rahmen 13 ab. Im vorliegenden Fall ist das aufgewickelte Trägerband 12 so konzipiert, dass ein Rollenwechsel in zwei Minuten durchgeführt werden kann und alle fünf Stunden durchgeführt werden muss. Der durch den Pressstempel verwendete Druckbereich zum Aufpressen bewegt sich von 0 bis 200 N und die durch die Beheizung erzeugte Temperatur im Bereich von Raumtemperatur bis 200°C. Im Betrieb bewegt sich der beheizte Pressstempel möglichst im oberen Abschnitt dieser angegebenen Bereiche. Anschließend wird der mit der Heißklebefolie 13 versehene Kartengrundkörper 15 in eine Inspektionseinheit 20 überführt. In dieser Inspektionseinheit 20 wird sowohl die Lage als auch die Vollständigkeit des Heißklebefolienrahmens 13 in dem Kartengrundkörper 15 festgestellt. Eine schlechte Einbringung wird erkannt und Ausschuss an ein Schlechtkartenfach 21 weitergeleitet.

In dem dritten Bereich der Anlage 1 befindet sich als Herzstück ein Drehteller 22 zum taktweisen Weitertransport von Kartengrundkörpem 15. Mittels dem schematisch dargestellten Kartenumsetzer 23 werden die mit dem Heißklebefolienrahmen 13 versehene Kartengrundkörper 15 in einer Aufnahmestation 24 überführt und abgelegt. Im vorliegenden Ausführungsbeispiel umfasst der Drehteller 22 zehn Aufnahmestationen 24. In einem Taktschritt dreht sich daher der Drehteller 22 um einen Winkelbetrag von 36° um eine vertikale Achse weiter. Die Anzahl der Aufnahmestationen 24 kann jedoch je nach Anwendungszweck variiert werden. Die Drehrichtung des Drehtellers 22 erfolgt gemäß Fig. 1 im Uhrzeigersinn.

Nach dem Ablegen des Kartengrundkörpers 15 in eine Aufnahmestation 24 wird in einer Kaltklebedosierstation 25 ein Kaltkleber in die Aussparung 16 im Kartengrundkörper 15 eingebracht. Dies erfolgt bevorzugt in der unteren Abstufung 18,1. Die Dosierstation 25 kann den Klebstoff sowohl in X-, Y- und Z-Achse exakt positionieren. Der Antrieb erfolgt bevorzugt motorisch. Im vorliegenden Fall wird ein durch Licht aktivierbarer Klebstoff verwendet. Dieser kann neben seinen Hafteigenschaften auch als Füllstoff zur Ausfüllung von Leerräumen bzw. Hohlräumen eingesetzt werden. Die Station 25 ist in der Lage, eine ausreichende Menge Klebstoff (auch als Füllmasse) in die Aussparung 16, insbesondere die untere Abstufung 1 einzubringen.

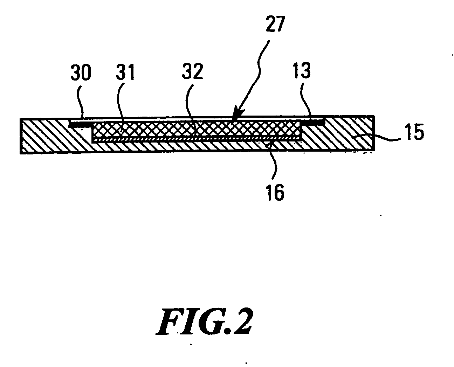

In einer nachfolgenden Klebeaktivierungsstation 26 wird der lichtaktivierbare Klebstoff bis zu 1200 ms lang mit hoher Intensität angeblitzt und so aktiviert. Bevorzugt wird dem Klebstoff angepasstes Licht verwendet. Je nach Intensität des Anblitzens, kann nach der Aktivierung des Klebstoffs eine Implantierung eines Chipmoduls 27 (siehe Fig. 2) bereits nach ca. 4 s in den Kartengrundkörper 15 erfolgen. Je höher die Lichtintensität bei der Aktivierung, desto kürzer ist das Zeitfenster bis zur Implantierung und desto schneller härtet der Klebstoff aus.

Mittels einer Inspektionsstation 28 wird die Dispensierung des UV-Klebstoffes überwacht, so dass Ausschuss auf dem Drehteller 22 festgestellt und bei der anschließenden Implantierung übergangen wird.

In der Einbringstation 29 erfolgt das Einsetzen des Chipmoduls 27 in die Aussparung 16 des Kartengrundkörpers 15.

Anhand der Fig. 2 ist zu erkennen, dass ein Chipmodul 27 im Wesentlichen aus zwei Schichten aufgebaut ist. Die erste, obere Schicht 30 bildet die Kontaktzone. Diese besteht bevorzugt aus einer strukturierten Metallfolie, wie sie von jeder EC-Karte in ähnlicher Weise bekannt ist. Unterhalb dieser Folie 30 befindet sich der Verkappungsbereich 31. Dieser aus einem aushärtenden Kunststoff bestehende Verkappungsbereich 31 umschließt den oder die Mikrochips und die Anschlüsse, um diese sicher zu schützen.

Während die überstehenden Randzonen des Folienbereichs 30 auf dem Stufenabsatz 18 der Aussparung 16 aufliegen und die obere Aussparung 18 ausfüllen, ist der Verkappungsbereich 31 in der unteren Abstufung 18.1 angeordnet. Unterhalb des Verkappungsbereichs 31 kann ein Kaltkleber 32 vorgesehen werden, der durch die Station 25 eingebracht wird. Der Kaltkleber 32 sorgt für ein sicheres Anhaften des Verkappungsbereichs 31.

Kartengrundkörper 15 werden in vielen Fällen mit jeweils gleichgroßen Aussparungen 18 hergestellt, wohingegen der Verkappungsbereich 31 des Chipmoduls 27 in seiner Größe variieren kann. Hierdurch würden unterhalb des Folienbereichs 30 Hohl- bzw. Leerräume entstehen. Um dies zu vermeiden, kann an diese Stellen ausreichend Kaltkleber 32 eingebracht werden, der dann auch als Füllstoff dient. Auf die Station 25, 26 und 28 kann jedoch auch verzichtet werden oder diese werden stillgesetzt, wenn das Einbringen von Kaltkleber 32 in die Multimediakarte 4 nicht gewünscht ist. Andere Bearbeitungsstationen können stattdessen an dieser Stelle angeordnet werden.

Im vierten Bereich der Anlage 1 befindet sich ein um eine vertikale Achse drehender Drehteller 33, der als Aufheizstation für Chipmodule 27 dient. Die Chipmodule 27 sind auf einem Ablagesystem 34 auf Ablageplatten 35 angeordnet. Diese Ablageplatten 35 sind relativ zueinander verfahrbar und jeweils drei Chipkartenmodule 27 liegen nebeneinander. Mittels des Handhabesystems 36 werden die Chipmodule 27 einzeln von einer Ablageplatte 35 entnommen und in eine Aufnahmestation 37 des Drehtellers 33 abgesetzt. Im vorliegenden Fall umfasst der Drehteller 33 zwölf Aufnahmestationen 37. Demnach dreht sich der Drehteller 33 bei jedem Taktschritt um 30° weiter. Aber auch hier ist die Anzahl der Aufnahmestation 37 beliebig nach den Anforderungen variierbar. Auch das Handhabesystem 36 kann die Module 27 an unterschiedlichen Startpositionen auf dem Drehteller 33 in die Aufnahmestation 37 einsetzen. In jede Aufnahmestation 37 wird ein Chipmodul 27 eingesetzt. Der Drehteller 33 dreht sich gemäß Fig. 1 gegen Uhrzeigersinn. Im Extremfall besteht demnach die Möglichkeit, dass ein Chipmodul 27 zehn Taktschritte auf dem Drehteller 33 verbleibt.

Der Drehteller 33 ist mittels einer nicht näher dargestellten Heißlufteinrichtung mit einstellbarem Druck und Luftstrom versehen. Die Heiß- bzw. Warmluft umströmt den Drehteller 33 bzw. die Aufnahmestationen 37 und wärmt somit die Module (27) vor. Bei einer beispielhaften Taktzeit von 1,8 s kann bei zwölf Aufnahmestationen eine relativ hohe Verweilzeit im warmen Luftstrom von bis zu 18 s realisiert werden.

Der Vorteil der heißen Luft besteht in dem unkritischen Verhalten bei einer Stillstandsituation, da die Temperatur der Chipmodule 27 niemals die Temperatur der erzeugten Luft überschreiten kann, was bei Wärmestrahlung (wie z. B. Heizplatten) nicht in dieser Form garantierbar ist. Ein Ausfall der Chipmodule 27 durch Überhitzen wird vermieden. Die Heißluftvorrichtung kann auf vielfältige Weise ausgestaltet werden. Günstig ist eine gemeinsame Luftzuführung in Art einer den Drehteller überdeckenden Haube. Ein weiterer Vorteil dieser Modulvorheizung besteht bei der Verwendung von lichtaktivierbarem Klebstoff darin, dass ein wesentlich schnelleres und besseres Aushärteverhalten des Kaltklebers 32 erreicht wird. Mittels des Handhabesystems 38 werden die vorgeheizten Module 27 von dem Drehteller 33 entnommen und in die Einbringstation 29 überführt. Vorab erfolgt eine Ablage in eine beheizte Zwischenzentrierung 39, um eine exakte Ausrichtung zu bewirken. Damit in der Zwischenzentrierung 39 möglichst wenig Wärme verlorengeht, kann diese ebenfalls beheizt werden. Die Temperatur bewegt sich dabei im Bereich zwischen Raumtemperatur und 200°C, wobei bevorzugt im Betrieb ein oberer Abschnitt dieses Bereichs angestrebt wird.

Der Drehteller 33 könnte z.B. einer Scheibe mit entsprechenden Aufnahmeöffnungen (Aufnahmestation 37) aufweisen, die einen rahmenförmigen Auflagerand umfassen. Diese Scheibe könnte sich innerhalb einer kreisförmigen Aussparung einer zweiten Scheibe drehen, so dass unterhalb der Aufnahmeöffnungen ein zumindest kreisringförmiger Kanal gebildet ist. In diesem Kanal kann die Warmluft entweder im Gegen- oder Gleichlauf zur Drehrichtung der Scheibe eingeblasen werden. Dieses ganze System kann dann bis auf die Stelle, an der die Chipmodul eingesetzt bzw. entnommen werden, mit einer Abdeckung versehen sein, so dass möglichst wenig Warmluft im Bereich der Aufnahmestation 37 entweicht. Die Abführung der Heiß- bzw. Warmluft kann dann z.B. über eine zentrale Abluftführung im wesentlichen im Zentrum der Scheibe folgen.

In der Einbringstation 29 wird das zentrierte Modul mit einem weiteren Handhabesystem 40 in den Kartengrundkörper 15 eingesetzt und mit Temperatur und Druck geheftet. Ein nicht mehr dargestellter Heftstempel weist im vorliegenden Ausführungsbeispiel eine U-Form auf und kann weitere Energie in das Modul durch seine Beheizung einbringen. Der Druckbereich des Heftstempels liegt bei 0 bis 150 N, die Temperatur bei Raumtemperatur bis 230°C und die Presszeit bei 0 bis 1200 ms. Auch hier werden im Betrieb bevorzugt obere Abschnitte der angegebenen Bereiche angestrebt. Das Heften des Moduls 27 dient der exakten Positionierung unmittelbar beim Einbringen des Moduls 27 durch das Handhabesystem 40. Die Handhabesysteme 38 und 40 können ebenfalls zum Ausgleichen von Wärmeverlusten beheizt sein.

In den Heißklebestationen 41 und 42 wird das geheftete Modul 27 mit dem Kartengrundkörper 15 unter Druck und Temperatur verklebt. Die Verbindung erfolgt durch das teilweise Aufschmelzen bzw. Verschweißen des Rahmens aus Heißklebefolie 13 und des wirkenden Kaltklebers 32. Der Druckbereich in diesen Stationen 41 und 42 beträgt 10 bis 250 N, der Temperaturbereich RT bis 230°C und die Presszeit 0 bis 1200 ms. Auch hier werden die oberen Abschnitte der angegebenen Bereiche im Betrieb angestrebt. Durch die Anzahl der Aufnahmestation 24 ist es auch möglich, bis zu vier dieser Heißklebestationen hintereinander anzuordnen. Im vorliegenden Fall ist die Station 43 als Kaltpressstation ausgestaltet. Während in den Heißpressstationen 41 und 42 ein beheizter, nicht dargestellter Pressstempel auf das Chipmodul 27 aufdrückt und Wärme einbringt, erfolgt dies in der Kaltpressstation 43 mit einem gekühlten Pressstempel, um überschüssige Wärme aus dem Modul 27 und dem Kartengrundkörper 15 zu holen. Der Druckbereich liegt bei 0 bis 50 N, der Temperaturbereich bei ca. 12°C - 15°C (Kühlwasser) und die Presszeit bei 0 bis 1200 ms. Bei Druck- und Presszeit werden wieder möglichst hohe Werte dieses angegebenen Bereichs angestrebt, wohingegen bei der Kühlung ein möglichst niedriger Wert im Betrieb gewünscht ist.

Mit der Bezugsziffer 44 ist ein Ausgabefach bezeichnet, in das Kartengrundkörper 15, die durch die Inspektionsstation 28 als schlecht erkannt worden sind, und eine nicht wünschenswerte Kaltklebedosierung aufweisen, ausgegeben werden. Mit dem Kartenumsetzer 45 werden die Multimediakarten 4 von dem Drehtisch 22 entnommen und in eine Überprüfungseinheit 46 überführt. In dieser Überprüfungseinheit 46 erfolgt eine Überprüfung der Abmessung, insbesondere der Höhe der Multimediakarte 4. Die in der Überprüfungseinheit 46 als unzulässig erkannten Multimediakarten 4 werden in das Schlechtkartenfach 47 ausgegeben. Alle anderen Multimediakarten 4 werden auf dem Ablagesystem 2 abgelegt. Im Abschnitt 48 des zweiten Bereichs kann in den im Ausführungsbeispiel der Fig. 1 vorhandenen Leerraum noch eine Zusatzstation, z.B. zum Etikettieren, Verpacken und ähnlichem vorgesehen werden.

Der anhand des Anlagenaufbaus 1 oben beschriebene Ablauf zur Erzeugung von Chipkarten, insbesondere Multimediakarten 4, ist vollkommen neu. Demnach ist auch das Gesamtkonzept als erfinderisch anzusehen. Allerdings wird auf einige Details auch verzichtet werden können, ohne das Prinzip der Erfindung zu verlassen. Sollte z. B. kein Kaltkleber gewünscht sein, kann auf die Station 25, 26, 28 verzichtet werden. Auch eine Zwischenzentrierung 39 ist nicht unbedingt erforderlich, falls die Handhabesysteme unmittelbar für eine geeignete Zentrierung und Einsetzung in der Station 29 sorgen. Sämtliche Überprüfungs- und Ausgabestationen sind als optional anzusehen. Insbesondere der Materialfluss der Kartengrundkörper 15 und der Chipmodule 27 innerhalb der Anlage 1 sorgt für eine äußerst kompakte und vorteilhafte Ausführung.

Bezüglich der Aufbringstation 6 sei noch angemerkt, dass herkömmliche Heißklebefolien durch Stanzen und Abgittern so vorkonditioniert werden, dass das Trägerband 12 den Klebstoff nur noch in Form der anschließenden Klebeverbindung 13 bereithält. Zum Einbringen des Folienrahmens 13 in den Kartengrundkörper 15 wird der Kartengrundkörper 15 zunächst unter der Heißpressstation 19 zentriert. Das Trägerband 12 wird unter dem Pressstempel (Schweißstempel) geführt und mit einem Motor verfahren. Dabei kann die Position des Trägerbandes 12 (quer zur Laufrichtung) verstellt werden. Dies dient der genauen Platzierung des Rahmens 13 in der Aussparung 16 (Kartenkavität). Zum Einstellen der Position des Rahmens 13 in dem Kartengrundkörper in Bandlaufrichtung, wird eine Kante des Klebstoffrahmens 13 oder der Stanzung 14 mit einem Sensor erkannt und per Software durch einen Offset des Antriebsmotors eingestellt.

Das Implantieren des Kleberahmens 13 in den Kartengrundkörper 15 erfolgt in zwei Schritten. Zunächst wird die Station 6 (inklusive Bandführung) nach unten auf den Kartengrundkörper 15 aufgesetzt und dann der Rahmen 13 auf dem Trägerband 12 mit Hilfe eines beheizten Pressstempels (Schweißstempels) in den Kartengrundkörper mit variablem Druck, Temperatur und Zeit eingepresst.

Die Position des beheizten Pressstempels ist dabei in X- und Y-Richtung einstellbar.

Anschließend wird zunächst der Pressstempel zurückgefahren, dann die Station 6 angehoben. Durch das Hochheben der Station 6 löst sich der Rahmen 13 vom Trägerband 12, da dieser dann bereits am Kartengrundkörper 15 haftet.

Zur Erkennung der korrekten Positionierung des Rahmens 13 wird die Inspektionseinheit 20 (Pattern und Recognition System (PRS)) eingesetzt. Damit werden Kartengrundkörper 15 mit schlecht platzierten Heißklebefolienrahmen 13 erkannt, so dass nur Gutkarten zur Modulimplantation verwendet werden. Dies ist insbesondere nötig, da zur Zeit eine hundertprozentige Qualität der Klebefolienrahmen 13 auf dem Trägerband 12 nicht gewährleistet werden kann (fehlende, nicht vollständige und schief platzierte Kleberahmen 13).

## Patentansprüche

1. Verfahren zum Heißpressverbinden mindestens eines Chipmoduls (27) mit einem Trägersubstrat (15), bei dem das mindestens eine Chipmodul (27) mit dem Trägersubstrat (15) in Kontakt gebracht und mit einem beheizten Pressstempel ein zumindest bereichsweises Heißverkleben des mindestens einem Chipmoduls (27) mit dem Trägersubstrat (15) bewirkt wird, **dadurch gekennzeichnet, dass** das mindestens eine Chipmodul (27) vor dem Heißklebevorgang separat von dem Trägersubstrat (15) auf eine für das Chipmodul (27) unkritische Temperatur erhitzt, zu dem Trägersubstrat (15) überführt und in einem erhitzten Zustand durch den beheizten Pressstempel mit dem Trägersubstrat (15) heiß verklebt wird.

2. Verfahren nach Anspruch 1, **dadurch gekennzeichnet, dass** das Chipmodul (27) auf eine Temperatur von 150°C bis 200°C vorgeheizt wird.

3. Verfahren nach Anspruch 1 oder 2, **dadurch gekennzeichnet, dass** das Chipmodul (27) mittels eines Warmluftstroms auf die gewünschte Temperatur gebracht wird.

4. Verfahren nach einem der Ansprüche 1 bis 3, **dadurch gekennzeichnet, dass** das Chipmodul (27) zuerst erhitzt und anschließend mittels einer Übergabeeinheit (38, 39, 40) auf dem Trägersubstrat (15) platziert wird.

5. Verfahren nach Anspruch 4, **dadurch gekennzeichnet, dass** über die Übergabeeinheit (38, 39, 40) ein Temperaturausgleich zum im Wesentlichen Ausgleichen der Temperaturverluste erfolgt.

6. Verfahren nach einem der vorangegangenen Ansprüche, **dadurch gekennzeichnet, dass** vor dem Heißverkleben mit dem Pressstempel ein Heftvorgang zum Anheften des Chipmoduls (27) an dem Trägersubstrat (15) erfolgt.

7. Verfahren nach einem der vorangegangenen Ansprüche, **dadurch gekennzeichnet, dass** das Chipmodul (27) und das Trägersubstrat (15) unter Zwischenfügen eines Heißverklebers (13) miteinander heißverklebt werden.

8. Verfahren nach Anspruch 7, **dadurch gekennzeichnet, dass** als Heißverkleber eine Heißklebefolie (13) verwendet wird.

9. Verfahren nach einem der vorangegangenen Ansprüche, **dadurch gekennzeichnet, dass** das Vorheizen des Chipmoduls (27), Auf- und/oder Einsetzen auf bzw. in das Trägersubstrat (15) und das Heißverkleben in einem getakteten Fließherstellverfahren ausgeführt wird, wobei das Heißpressen sich über mindestens zwei Takte, bevorzugt drei Takte, erstreckt.

10. Verfahren nach Anspruch 9, **dadurch gekennzeichnet, dass** das Chipmodul (27) auf einem taktweise um einen vorgegebenen Winkelbetrag sich weiterdrehenden beheizten Drehteller (33) weiterbewegt wird.

11. Verfahren nach einem der vorangegangenen Ansprüche, **dadurch gekennzeichnet, dass** als Trägersubstrat ein Kartengrundkörper (15) verwendet wird und das Chipmodul (27) in eine Aussparung (16) im Kartengrundkörper (15) eingesetzt wird.

12. Verfahren nach einem der Ansprüche 8 bis 11, **dadurch gekennzeichnet, dass** mindestens ein Heißklebefolienstück (13), das auf einem Trägerband (12) angeordnet ist, mit dem Trägersubstrat (15) in Kontakt gebracht, eine Verbindung mit dem Trägersubstrat (15) herbeigeführt und anschließend das Trägerband (12) von dem an dem Trägersubstrat (15) anhaftenden Heißklebefolienstück (13) abgezogen wird.

13. Verfahren nach Anspruch 12, **dadurch gekennzeichnet, dass** die Verbindung zwischen Trägersubstrat (15) und Heißklebefolienstück (13) mittels eines auf das Trägerband (12) aufdrückenden, beheizten Pressstempel (5) herbeigeführt wird.

14. Verfahren nach Anspruch 12 oder 13, **dadurch gekennzeichnet, dass** das mindestens eine Heißklebefolienstück (13 die Klebeform genau vorgibt und vor dem Verbinden mit dem Trägersubstrat (15) eine im Wesentlichen exakte Ausrichtung des Heißklebefolienstücks (13) zum Trägersubstrat (15) erfolgt.

15. Verfahren nach einem der Ansprüche 12 bis 14, **dadurch gekennzeichnet, dass** mindestens ein Heißklebefolienstück (13) mit einem Grund (17) einer in einem Chipkartengrundkörper (15) eingeformten Aussparung (16) verbunden wird, wobei nachfolgend das mindestens eine Chipmodul (27) in die Aussparung (16) eingesetzt wird.

16. Verfahren nach einem der Ansprüche 11 bis 15, **dadurch gekennzeichnet, dass** in die Aussparung (16) im Chipkartengrundkörper (15) ein lichtaktivierbarer Klebstoff (32) eingebracht wird.

17. Verfahren nach Anspruch 16, **dadurch gekennzeichnet, dass** der Klebstoff (32) vor dem Einsetzen des Chipmoduls (27) mit hoher Intensität angeblitzt und dadurch aktiviert wird.

18. Verfahren nach einem der Ansprüche 10 bis 17, **dadurch gekennzeichnet, dass** das Heißverkleben in mindestens zwei Taktschritten erfolgt

19. Verfahren nach einem der Ansprüche 1 bis 18, **dadurch gekennzeichnet, dass** nach dem Heißverkleben ein Kühlvorgang zum Entfernen einer vorbestimmten Wärmemenge von dem Chipmodul (27) und/oder dem Trägersubstrat (15) erfolgt.

20. Verfahren nach Anspruch 19, **dadurch gekennzeichnet, dass** der Kühlvorgang durch einen gekühlten Pressstempel durchgeführt wird.

21. Vorrichtung zum Heißpressverbinden von mindestens einem Chipmodul (27) mit einem Trägersubstrat (15), insbesondere zum Durchführen des Verfahrens nach einem der Ansprüche 1 bis 20, mit einer Zuführeinrichtung für Chipmodule (27), einer Zuführeinrichtung für Trägersubstrate, einer Heißpresseinrichtung (41, 42) zum Heißverkleben des mindestens eines Chipmoduls (27) mit einem Trägersubstrat (15), einer Heizeinrichtung (33) zum Erhitzen des mindestens einen elektrischen Chipmoduls (27) auf eine für dieses unkritische Temperatur und einer Handhabeeinrichtung zum Auf- und/oder Einsetzen mindestens eines vorgeheizten Chipmoduls (27) auf bzw. in ein Trägersubstrat (15), wobei die Heizeinrichtung (33) in Produktionsreihenfolge vor der Handhabeeinrichtung und der Heißpresseinrichtung (41, 42) angeordnet ist und die Heißpresseinrichtung (41, 42) auf ein vorgewärmtes Chipmodul (27) einwirkbar ausgestaltet ist.

22. Vorrichtung nach Anspruch 21, **dadurch gekennzeichnet, dass** die Heizeinrichtung (33) eine einstellbare Warm- bzw. Heißluftzuführung zum Erhitzen der Chipmodule (27) aufweist.

23. Vorrichtung nach Anspruch 22, **dadurch gekennzeichnet, dass** die Heizeinrichtung einen Drehteller (33) mit Aufnahmestation (37) für die Chipmodule (27) umfasst und die Aufnahmestation (37) eine Warm- bzw. Heißluftzuführung aufweisen.

24. Vorrichtung nach Anspruch 23, **dadurch gekennzeichnet, dass** die Zuführeinrichtung für die Trägersubstrate (15) einen Drehtisch (22) mit Aufnahmestation (24) für die Trägersubstrate (15) umfasst und durch die Handhabeeinrichtung (29) ein Chipmodul (27) aus einer Aufnahmestation (37) des Drehtellers (33) entnehmbar und in einer Aufnahmestation (24) des Drehtischs (22) zum Auf- und/oder Einsetzen auf bzw. in das Trägersubstrat (15) einsetzbar ist.

25. Vorrichtung nach Anspruch 23 oder 24, **dadurch gekennzeichnet, dass** dem Drehtisch (22) mindestens eine Heißpressstation (41, 42) mit einem beheizbaren Pressstempel als Heißpresseinrichtung zugeordnet ist, wobei der Pressstempel in eine Aufnahmestation (24) des Drehtischs (22) einfahrbar ausgestaltet ist.

26. Vorrichtung nach einem der Ansprüche 21 bis 25, **dadurch gekennzeichnet, dass** eine Kühleinrichtung (43) zum Kühlen des Chipmoduls (27) und/oder Trägersubstrats (15) nach dem Heißverkleben vorgesehen ist.

27. Vorrichtung nach einem der Ansprüche 21 bis 25, **dadurch gekennzeichnet, dass** eine Aufbringeinrichtung (6) zum Aufbringen eines Heißverklebers auf das Trägersubstrat (15) vorgesehen ist.

28. Vorrichtung nach Anspruch 27, **dadurch gekennzeichnet, dass** die Aufbringeinrichtung (6) eine Trägerbandtransporteinheit (10, 11) zur Aufnahme und zum Bewegen eines Trägerbandes (12) mit darauf angeordneten Heißklebefolienstücken (13) und eine Andrückeinheit zum Andrücken mindestens eines Heißklebefolienstücks (13) zusammen mit dem Trägerband (12) an ein Trägersubstrat (15) umfasst.

29. Vorrichtung nach Anspruch 28, **dadurch gekennzeichnet, dass** die Andrückeinheit einen beheizbaren Pressstempel umfasst.

30. Vorrichtung nach einem der Ansprüche 21 bis 29, **dadurch gekennzeichnet, dass** dem Drehtisch (22) mindestens eine Kleberauftragsstation (25) zum Auftragen von Klebstoffen (32) auf das Trägersubstrat (15) in Produktionsreihenfolge vor der Handhabeeinrichtung (29) zugeordnet ist.

31. Vorrichtung nach Anspruch 30, **dadurch gekennzeichnet, dass** die Kleberauftragsstation (25) durch einen lichtaktivierbaren Klebstoff (32) auftragend ausgestaltet ist und dem Drehtisch (22) in Produktionsreihenfolge nachfolgend der Kleberauftragsstation (25) und vor der Kontaktierungseinrichtung (29) dem Drehtisch (22) eine Aktivierungsstation (26) für den Klebstoff (22) zugeordnet ist.

## Claims

1. A method for the hot-press bonding of at least one chip module (27) to a supporting substrate (15), in which the at least one chip module (27) is brought into contact with the supporting substrate (15) and using a heated pressing die there is carried out an at least zonal hot bonding of the at least one chip module (27) to the supporting substrate (15), **characterised in that**, before the hot bonding procedure, the at least one chip module (27) is heated separately from the supporting substrate (15) to a temperature which is not critical for the chip module (27), is transferred to the supporting substrate (15) and in a heated state is hot-bonded to the supporting substrate (15) by the heated pressing die.

2. A method according to Claim 1, **characterised in that** the chip module (27) is preheated to a temperature of 150°C to 200°C.

3. A method according to Claim 1 or 2, **characterised in that** the chip module (27) is brought to the desired temperature by means of a hot air stream.

4. A method according to any one of Claims 1 to 3,' **characterised in that** the one chip module (27) is firstly heated and subsequently is positioned on the supporting substrate (15) by means of a transfer unit (38,39,40).

5. A method according to Claim 1, **characterised in that** temperature compensation to compensate substantially for the temperature losses is carried out via the transfer unit (38,39,40).

6. A method according to any one of the preceding Claims, **characterised in that** before the hot bonding using the pressing die a tacking procedure is carried out to tack the chip module (27) to the supporting substrate (15).

7. A method according to any one of the preceding Claims, **characterised in that** the chip module (27) and the supporting substrate (15) are hot-bonded to one another, being joined together by a hot-melt adhesive (13).

8. A method according to Claim 7, **characterised in that** a hot-melt film (13) is used as the hot-melt adhesive.

9. A method according to any one of the preceding Claims, **characterised in that** the preheating of the chip module (27), application on to and/or insertion into the supporting substrate (15) and the hot-bonding are carried out in a timed assembly-line production process, wherein the hot-pressing extends over at least two clock cycles, preferably three clock cycles.

10. A method according to Claim 9, **characterised in that** the chip module (27) is moved further on a heated dial feeder (33) which rotates further by a predetermined angular amount.

11. A method according to any one of the preceding Claims, **characterised in that** as the supporting substrate a card body (15) is used and the chip module (27) is inserted into a recess (16) in the card body (15).

12. A method according to any one of Claims 8 to 11, **characterised in that** at least one piece of hot-melt film (13), which is disposed on a supporting strip (12) and is brought into contact with the supporting substrate (15), brings about a bond to the supporting substrate (15) and, subsequently, the supporting strip (12) is removed from the piece of hot-melt film (13) adhering to the supporting substrate (15).

13. A method according to Claim 12, **characterised in that** the bond between the supporting substrate (15) and the piece of hot-melt film (13) is brought about by means of a heated pressing die (5) pressing on to the supporting strip (12).

14. A method according to Claim 12 or 13, **characterised in that** the at least one piece of hot-melt film (13) accurately predetermines the bonding form and before the bond to the supporting substrate (15) substantially-exact alignment of the piece of hot-melt film (13) with the supporting substrate (15) is effected.

15. A method according to any one of Claims 12 to 14, **characterised in that** at least one piece of hot-melt film (13) is bonded to a base (17) of a recess (16) formed in a chip card body (15), wherein subsequently the at least one chip module (27) is inserted into the recess (16).

16. A method according to any one of Claims 11 to 15, **characterised in that** a light-activatable adhesive (32) is introduced into the recess (16) in the chip card body (15).

17. A method according to Claim 16, **characterised in that**, before the insertion of the chip module (27), the adhesive (32) is flashed at high intensity and is thereby activated.

18. A method according to any one of Claims 10 to 17, **characterised in that** the hot-bonding is carried out in at least two clock stages.

19. A method according to any one of Claims 1 to 18, **characterised in that**, after the hot-bonding, a cooling process is carried out to remove a predetermined amount of heat from the chip module (27) and/or from the supporting substrate (15).

20. A method according to Claim 19, **characterised in that** the cooling process is carried out by a cooled pressing die.

21. An apparatus for the hot-press bonding of at least one chip module (27) to a supporting substrate (15), in particular for carrying out the method according to any one of Claims 1 to 20, with a feed device for chip modules (27) a feed device for supporting substrates, a hot-pressing device (41,42) for the hot-bonding of the at least one chip module (27) to a supporting substrate (15), a heating device (33) for heating the at least one electric chip module (27) to a temperature which is not critical therefor, and a handling device for the application and/or insertion of at least one preheated chip module (27) on to or into a supporting substrate (15), wherein the heating device (33) is disposed in the order of production upstream of the handling device and the hot-pressing device (41,42), and the hot-pressing device (41,42) is designed to be able to act on a preheated chip module (27).

22. An apparatus according to Claim 21, **characterised in that** the heating device (33) has an adjustable hot-air supply for heating the chip modules (27).

23. An apparatus according to Claim 22, **characterised in that** the heating device comprises a dial feeder (33) with a seating station (37) for the chip modules (27) and the seating station (37) has a hot-air supply.

24. An apparatus according to Claim 23, **characterised in that** feed device for the supporting substrate (15) comprises a revolving table (22) with seating station (24) for the supporting substrate (15), and by the handling device (29) one chip module (27) can be taken from a seating station (37) of the dial feeder (33) and can be inserted into a seating station (24) of the revolving table (22) for application on to and/or insertion into the supporting substrate (15).

25. An apparatus according to Claim 23 or 24, **characterised in that** at least one hot-pressing station (41,42) with a heatable pressing die as the hot-pressing device is associated with the revolving table (22), wherein the pressing die is designed so that it can enter a seating station (24) of the revolving table (22).

26. An apparatus according to any one of Claims 21 to 25, **characterised in that** a cooling device (43) is provided for cooling the chip module (27) and/or the supporting substrate (15) after the hot-bonding.

27. An apparatus according to any one of Claims 21 to 25, **characterised in that** an application means (6) is provided for applying a hot-melt adhesive to the supporting substrate (15).

28. An apparatus according to Claim 27, **characterised in that** the application means (6) comprises a supporting strip conveying unit (10,11) for receiving and moving a supporting strip (12) with pieces of hot-melt adhesive film (13) disposed thereon, and a pressing unit for pressing at least one piece of hot-melt adhesive film (13) together with the supporting strip (12) on to a supporting substrate (15).

29. An apparatus according to Claim 28, **characterised in that** the pressing unit comprises a heatable pressing die.

30. An apparatus according to any one of Claims 21 to 29, **characterised in that** the revolving table (22) is associated with at least one adhesive-applying station (25) for applying adhesives (32) to the supporting substrate (15) disposed in the order of production upstream of the handling device (29).

31. An apparatus according to Claim 30, **characterised in that** the adhesive-applying station (25) is designed to apply a light-activatable adhesive (32) and is associated with the revolving table (22) in the order of production downstream of the adhesive-applying station (25) and upstream of the contacting device (29) an activating station (26) for the adhesive (22) [sic] is associated with the revolving table (22).

## Revendications

1. Procédé pour l'assemblage par pressage à chaud d'au moins un module à puce (27) avec un substrat support (15), dans lequel le au moins un module à puce (27) est amené en contact avec le substrat support (15) et un collage à chaud au moins par endroits du au moins un module à puce (27) avec le substrat support est réalisé avec un piston de presse chauffé, **caractérisé en ce qu'**au moins un module à puce (27) est réchauffé avant l'opération de collage à chaud séparément du substrat support (15) à une température non critique pour le module à puce (27), est transféré au substrat support (15) et est collé à chaud dans un état réchauffé par le piston de presse chauffé avec le substrat support (15).

2. Procédé selon la revendication 1, **caractérisé en ce que** le module à puce (27) est préchauffé à une température de 150°C jusqu'à 200°C.

3. Procédé selon la revendication 1 ou 2, **caractérisé en ce que** le module à puce (27) est amené à la température souhaitée au moyen d'un flux d'air chaud.

4. Procédé selon l'une quelconque des revendications 1 à 3, **caractérisé en ce que** le module à puce (27) est d'abord réchauffé et ensuite placé au moyen d'une unité de transfert (38, 39, 40) sur le substrat support (15).

5. Procédé selon la revendication 4, **caractérisé en ce qu'**une compensation de température pour essentiellement la compensation des pertes de température intervient par l'unité de transfert (38, 39, 40).

6. Procédé selon l'une quelconque des revendications précédentes, **caractérisé en ce qu'**un procédé d'agrafage pour l'agrafage du module à puce (27) sur le substrat support (15) intervient avant le collage à chaud avec le piston de presse.

7. Procédé selon l'une quelconque des revendications précédentes, **caractérisé en ce que** le module à puce (27) et le substrat support (15) sont collés à chaud entre eux en intercalant une colle à chaud (13).

8. Procédé selon la revendication 7, **caractérisé en ce qu'**une feuille thermo-adhésive (13) est utilisée comme colle à chaud.

9. Procédé selon l'une quelconque des revendications précédentes, **caractérisé en ce que** le préchauffage du module à puce (27), la pose et/ou l'insertion sur ou dans le substrat porteur (15) et le collage à chaud sont réalisés dans un procédé synchronisé de fabrication par fluage, le pressage à chaud s'étendant sur au moins deux cycles, de préférence trois cycles.

10. Procédé selon la revendication 9, **caractérisé en ce que** le module à puce (27) est encore déplacé sur un plateau tournant (33) chauffé et continuant de tourner par cycle d'une valeur d'angle prédéfinie.

11. Procédé selon l'une quelconque des revendications précédentes, **caractérisé en ce qu'**un corps de base de carte (15) est utilisé comme substrat porteur et le module à puce (27) est inséré dans un évidement (16) dans le corps de base de carte (15).

12. Procédé selon l'une quelconque des revendications 8 à 11, **caractérisé en ce que** le au moins un morceau de feuille thermo-adhésive (13), qui est disposé sur une bande porteuse (12), est amené en contact avec le substrat support (15), un assemblage avec le substrat support (15) est réalisé et ensuite la bande porteuse (12) est enlevée du morceau de feuille thermo-adhésive (13) adhérant au substrat support (15).

13. Procédé selon la revendication 12, **caractérisé en ce que** l'assemblage entre le substrat support (15) et le morceau de feuille thermo-adhésive (13) est réalisé au moyen d'un piston de presse (5) chauffé et s'appliquant sur la bande porteuse (12).

14. Procédé selon la revendication 12 ou 13, **caractérisé en ce que** le au moins un morceau de feuille thermo-adhésive (13) prédéfinit exactement la forme de collage et une orientation à peu près exacte du morceau de feuille thermo-adhésive (13) avec le substrat support (15) intervient avant l'assemblage avec le substrat support (15).

15. Procédé selon l'une quelconque des revendications 12 à 14, **caractérisé en ce que** au moins un morceau de feuille thermo-adhésive (13) est relié à un fond (17) d'un évidement (16) formé dans un corps de base d'une carte à puce (15), le au moins un module à puce (27) étant inséré ensuite dans l'évidement (16).

16. Procédé selon l'une quelconque des revendications 11 à 15, **caractérisé en ce qu'**une colle (32) activable à la lumière est introduite dans l'évidement (16) dans le corps de base de la carte à puce (15).

17. Procédé selon la revendication 16, **caractérisé en ce que** la colle (32) est éclairée avec des flashs à forte intensité et de ce fait activée avant l'insertion du module à puce (27).

18. Procédé selon l'une quelconque des revendications 10 à 17, **caractérisé en ce que** le collage à chaud s'effectue en au moins deux étapes de cycle.

19. Procédé selon l'une quelconque des revendications 1 à 18, **caractérisé en ce qu'**une opération de refroidissement pour l'évacuation d'une quantité de chaleur prédéfinie du module à puce (27) et/ou du substrat support (15) intervient après le collage à chaud.

20. Procédé selon la revendication 19, **caractérisé en ce que** l'opération de refroidissement est effectuée par un piston de presse refroidi.

21. Dispositif pour l'assemblage par pressage à chaud d'au moins un module à puce (27) avec un substrat support (15), en particulier pour la mise en oeuvre du procédé selon l'une quelconque des revendications 1 à 20, avec un dispositif d'amenée pour des modules à puce (27), un dispositif d'amenée pour des substrats supports, un dispositif de pressage à chaud (41, 42) pour le collage à chaud du au moins un module à puce (27) avec un substrat support (15), un dispositif de chauffage (33) pour le réchauffement du au moins un module électrique à puce (27) à une température non critique pour ce module et un dispositif de manipulation pour la pose et/ou l'insertion d'au moins un module à puce préchauffé (27) sur ou dans un substrat support (15), le dispositif de chauffage (33) étant disposé dans la séquence de production avant le dispositif de manipulation et le dispositif de pressage à chaud (41, 42) et le dispositif de pressage à chaud (41, 42) est conçu de façon à pouvoir agir sur un module à puce (27) préchauffé.

22. Dispositif selon la revendication 21, **caractérisé en ce que** le dispositif de chauffage (33) présente une amenée réglable d'air chaud ou très chaud pour.le réchauffement des modules à puce (27).

23. Dispositif selon la revendication 22, **caractérisé en ce que** le dispositif de chauffage comprend un plateau tournant (33) avec une station de réception (37) pour les modules à puce (27) et la station de réception (37) présente une amenée d'air chaud ou très chaud.

24. Dispositif selon la revendication 23, **caractérisé en ce que** le dispositif d'amenée pour les substrats support (15) comprend une table tournante (22) avec station de réception (24) pour les substrats support (15) et un module à puce (27) peut être enlevé par le dispositif de manipulation (29) d'une station de réception (37) du plateau tournant (33) et peut être inséré dans une station de réception (24) de la table tournante (22) pour la pose et/ou l'insertion sur ou dans le substrat support (15).

25. Dispositif selon la revendication 23 ou 24, **caractérisé en ce qu'**au moins une station de pressage à chaud (41, 42) avec un piston de presse pouvant être chauffé est attribuée comme appareil de pressage à chaud à la table tournante (22), le piston de presse étant conçu de façon à pouvoir entrer dans une station de réception (24) de la table tournante (22).

26. Dispositif selon l'une quelconque des revendications 21 à 25, **caractérisé en ce qu'**un dispositif de refroidissement (43) est prévu pour le refroidissement du module à puce (27) et/ou du substrat support (15) après le collage à chaud.

27. Dispositif selon l'une quelconque des revendications 21 à 25, **caractérisé en ce qu'**un dispositif d'application (6) est prévu pour l'application d'une colle à chaud sur le substrat support (15).

28. Dispositif selon la revendication 27, **caractérisé en ce que** le dispositif d'application (6) comprend une unité de transport de bande support (10, 11) pour le logement et pour le déplacement d'une bande support (12) avec des morceaux de feuille thermo-adhésive (13) disposés dessus et une unité d'appui pour l'appui d'au moins un morceau de feuille thermo-adhésive (13) conjointement avec la bande support (12) sur un substrat support (15).

29. Dispositif selon la revendication 28, **caractérisé en ce que** l'unité d'appui comprend un piston de presse pouvant être chauffé.

30. Dispositif selon l'une quelconque des revendications 21 à 29, **caractérisé en ce qu'**au moins une station d'application de colle (25) pour l'application de colle (32) sur le substrat support (15) est attribuée à la table tournante (22) dans la séquence de production avant le dispositif de manipulation (29).

31. Dispositif selon la revendication 30, **caractérisé en ce que** la station d'application de colle (25) est conçue avec application par une colle (32) activable à la lumière et une station d'activation (26) pour la colle (32) est attribuée à la table tournante (22) dans la séquence de production après la station d'application de colle (25) et avant le dispositif d'établissement de contact (29).
